# EUROPÄISCHE PATENTANMELDUNG

(11) **EP 1 382 663 A2**
(43) Veröffentlichungstag der Anmeldung: **21.01.2004**
(21) Anmeldenummer: 03014564.3
(22) Anmeldetag: 07.07.2003
(51) Int. Cl.: C11C 3/00, C09D 167/08, C09D 133/06, C09D 175/00, C09D 191/00

(54) **Wasserverdünnbare Öle**

(30) Priorität: 19.07.2002 AT 11012002
(71) Anmelder: Surface Specialties Austria GmbH, 8402 Werndorf (AT)
(72) Erfinder: Paar, Willibald, Dr., 8010 Graz (AT); Friedl, Maximilian, 8101 Graz (AT); Gobec, Michael, 8010 Graz (AT)
(74) Vertreter: Deckers, Hellmuth, Dr.

(57) **Zusammenfassung**

Wasserverdünnbare Öle **ABC**, enthaltend Bausteine abgeleitet von Ölen **A** mit im Mittel mindestens einer olefinischen Doppelbindung pro Molekül, cyclischen olefinisch ungesättigten Anhydriden **B** und organischen Säuren **C**, die mindestens eine Säuregruppe und mindestens eine weitere Gruppe aufweisen, die mit einem cyclischen Säureanhydrid unter Ringöffnung und Addition reagiert, ein Verfahren zu ihrer Herstellung und ihre Verwendung als Zusatz zu wäßrigen Harzen und Dispersionen

## Beschreibung

Die Erfindung betrifft wasserverdünnbare Öle.

Wasserverdünnbare Öle sind aus dem Stand der Technik bereits bekannt. Sie werden hergestellt durch Umsetzung von Ölen, die durchschnittlich mindestens eine olefinische Doppelbindung im Molekül enthalten, mit Maleinsäureanhydrid. Die Anhydridgruppen werden durch Reaktion mit Wasser oder Alkoholen zur Dicarbonsäure oder zum Halbester geöffnet, nach Neutralisieren mit basischen Verbindungen lassen sich die Umsetzungsprodukte in Wasser zu stabilen Dispersionen dispergieren.

Ein Nachteil dieser bekannten Produkte ist, daß diese nur zu Dispersionen mit begrenztem Ölgehalt führen. Die Dispersionen lassen sich als Zumischkomponente in wäßrigen Harzen verwenden, um den Glanz der damit hergestellten Beschichtungen zu verbessern. Ein weiterer Nachteil dieser Produkte ist, daß beim Vermischen derartig hergestellter Dispersionen mit wasserverdünnten Acrylharzen oder Dispersionen anderer Harze häufig Entmischung zu beobachten ist. Dies begrenzt die technische Brauchbarkeit und Einsatzmöglichkeit derartiger Dispersionen.

Es besteht daher die Aufgabe, wasserverdünnbare Öle bereitzustellen, die eine verbesserte Verträglichkeit mit Dispersionen anderer wasserverdünnter Harze aufweisen und zu Dispersionen mit höheren Ölgehalten führen.

Die Aufgabe wird gelöst durch Umsetzungsprodukte **ABC** von Ölen **A** mit cyclischen, olefinisch ungesättigten Anhydriden **B** und organischen Säuren **C**, die zusätzlich Gruppen enthalten, die mit einem cyclischen Säureanhydrid unter Ringöffnung und Addition reagieren.

Die Erfindung betrifft daher wasserverdünnbare Öle **ABC**, enthaltend Bausteine abgeleitet von Ölen **A** mit im Mittel mindestens einer olefinischen Doppelbindung pro Molekül, cyclischen olefinisch ungesättigten Anhydriden **B** und organischen Säuren **C**, die mindestens eine Säuregruppe und mindestens eine weitere Gruppe aufweisen, die mit einem cyclischen Säureanhydrid unter Ringöffnung und Addition reagiert.

Unter wasserverdünnbar wird hier ein Stoff verstanden, der beim Verdünnen mit Wasser nicht spontan makroskopisch entmischt.

Die Erfindung betrifft weiter ein Verfahren zur Herstellung der Produkte **ABC**, indem zunächst Öle **A** mit den cyclischen olefinisch ungesättigten Anhydriden **B** umgesetzt werden. Die Anhydridgruppen werden dann in der zweiten Stufe durch Reaktion mit den Säuren **C** verbraucht, wobei eine direkt an der Kohlenstoffkette des Öls gebundene Säuregruppe sowie eine weitere entstehen, wobei die letztere durch den als Spacer wirkenden Rest der funktionellen Säure C einen größeren Abstand von der Kohlenstoffkette aufweist. Es wird angenommen, daß durch diesen sterischen Unterschied die bessere Wasserverträglichkeit bewirkt wird.

Es ist ebenfalls möglich, in der ersten Stufe durch Umsetzung der Säure **C** mit dem cyclischen Anhydrid **B** ein Zwischenprodukt **BC** zu erzeugen, das dann mit dem Öl **A** umgesetzt werden kann. Es ist weiter möglich, die Reaktion durch Umsetzung aller Komponenten gemeinsam vorzunehmen.

Die Öle A enthalten im Mittel mindestens eine olefinische Doppelbindung pro Molekül. Es lassen sich sowohl natürliche Öle **A1** (Ester von Glycerin mit Fettsäuren) als auch synthetische Öle einsetzen, die durch Oligomerisation oder Polymerisation von bevorzugt mehrfach ungesättigten Olefinen (Öle **A2**) oder durch Veresterung von einer oder mehreren Fettsäuren, von denen mindestens eine mindestens eine olefinische Doppelbindung aufweist, mit mehrwertigen Alkoholen und gegebenenfalls weiteren mindestens zweibasigen Säuren oder deren Anhydriden gewonnen werden können (Öle **A3**). Geeignete Öle sind insbesondere trocknende und halbtrocknende Öle **A1**, beispielsweise vegetabile Öle wie Leinöl, Sojaöl, Rapsöl, Rüböl, Baumwollsaatöl, Erdnußöl, Tallöl, Sonnenblumenöl, Safloröl, Jojobaöl, tierische Öle wie Walöl und Fischöl, und synthetische Öle **A2** wie Polybutadienöl oder andere Öle auf Basis von α,ω-Diolefinen sowie Öle aus Mischpolymeren von α,ω-Diolefinen und Monoolefinen und Öle **A3**, die gewonnen werden durch Kondensation von Fettsäuren A31, bevorzugt Gemischen aus natürlichen Fettsäuren, wobei mindestens eine der Fettsäuren mindestens eine olefinische Doppelbindung aufweist, wie Tallölfettsäure, Sojaölfettsäure, Leinölfettsäure oder Sonnenblumenölfettsäure, mit mehrwertigen Alkoholen **A32**, insbesondere mindestens dreiwertigen Alkoholen wie Glycerin, Trimethylolpropan, Sorbit und Pentaerythrit, sowie gegebenenfalls mehrbasigen, insbesondere zwei- oder dreibasigen Carbonsäuren **A33**, bevorzugt aromatischen Carbonsäuren, oder deren Anhydriden, wie Phthalsäureanhydrid und Trimellithsäureanhydrid oder deren Mischungen. Besonders bevorzugt werden Öle **A** mit einer Jodzahl von mindestens 90 g/g, insbesondere von 100 g/g bis 200 g/g.

Als cyclische ungesättigte Anhydride **B** sind insbesondere Maleinsäureanhydrid, Citraconsäureanhydrid, Itaconsäureanhydrid, Dodecenylbernsteinsäureanhydrid und Tetrahydrophthalsäureanhydrid geeignet. Besonders bevorzugt ist Maleinsäureanhydrid.

Als Säuren **C** kommen organische Säuren mit mindestens einer Säuregruppe und mindestens einer gegenüber Säureanhydriden unter Ringöffnung und Addition reaktiven Gruppe in Frage. Bevorzugt ist die Säuregruppe ausgewählt aus Carboxylgruppen, Phosphonsäuregruppen und Sulfonsäuregruppen. Die reaktiven Gruppen können Hydroxyl-, Amino- und Mercaptangruppen sein. Besonders bevorzugt werden aliphatische Hydroxycarbonsäuren mit 2 bis 20 Kohlenstoffatomen. Es ist auch möglich, epoxidierte Säuren einzusetzen, sofern eine stöchiometrisch ausreichende Menge an Wasser zugegen ist. Bevorzugt sind Hydroxysäuren wie Glykolsäure, Milchsäure, γ-Hydroxybuttersäure, δ-Hydroxyvaleriansäure, ε-Hydroxycapronsäure sowie Polyhydroxysäuren wie Dimethylolpropionsäure, Weinsäure und Traubensäure. Als Aminosäuren kommen zum Beispiel β-Alanin, γ-Aminobuttersäure, δ-Aminovaleriansäure und ε-Aminocapronsäure in Frage. Geeignete Mercaptosäuren sind Mercaptoessigsäure, 3-Mercaptopropionsäure, 2-Mercaptoäthansulfonsäure, 3-Mercapto-1-propansulfonsäure, 2,3-Dimercapto-1-propansulfonsäure, Mercaptobernsteinsäure, 2,3-Dimercaptobernsteinsäure und Mercaptobrenztraubensäure.

Unter den Phosphonsäuren sind 3-Aminopropylphosphonsäure und 2-Aminoäthylphosphonsäure zu nennen.

Ebenfalls verwendbar sind die stärker sauren Sulfonsäuren, insbesondere 4-Amino-1-naphthalinsulfonsäure, 4-Amino-3-hydroxy-1-naphthalinsulfonsäure, Aminomethansulfonsäure, 4-Hydroxy-1-naphthalinsulfonsäure und 3-Amino-1-propansulfonsäure.

Die Erfindung betrifft schließlich auch die Verwendung der wasserverdünnbaren Öle als Zusatz zu wäßrigen Dispersionen anderer Harze sowie die so hergestellten wasserverdünnbaren Bindemittel, die die wasserverdünnbaren Öle **ABC** enthalten. Die erfindungsgemäßen wasserverdünnbaren Öle lassen sich besonders vorteilhaft als Zusatz zu wäßrigen Acrylharzen oder Polyurethanharz-Dispersionen einsetzen, wobei das Massenverhältnis von Öl zu Harz von 1:19 bis zu 1: 4 betragen kann. Ein besonderer Vorteil derartiger Mischungen ist, daß sich das Trocknungsverhalten des Mischbindemittels durch die Mischung auf den betreffenden Anwendungszweck genau abstimmen läßt.

Unter wäßrigen Acrylharzen werden hier wäßrige Dispersionen von Copolymerisaten verstanden, die mindestens einen Massenanteil von 20 % an Bausteinen abgeleitet von Acryl- oder Methacrylverbindungen enthalten. Solche Acryl- oder Methacrylverbindungen sind bevorzugt Ester der Acryloder Methacrylsäure mit aliphatischen, bevorzugt ein- oder zweiwertigen, Alkoholen mit 1 bzw. 2 bis 20 Kohlenstoffatomen, die Nitrile dieser Säuren und die Säuren selbst. Als weitere Bestandteile weisen die Copolymerisate insbesondere von den Monomeren Styrol, Vinyltoluol, Vinylchlorid, Vinylestern wie Vinylacetat, Vinylpropionat oder Vinylestern der Versatic-Säuren abgeleitete Bausteine auf.

Wäßrige Polyurethanharz-Dispersionen sind bekannt und weisen Bausteine auf abgeleitet von Polyhydroxypolyäthern, Polyhydroxypolyestern, Polyhydroxypolycarbonaten, mehrfunkrionellen Isocyanaten, gegebenenfalls von niedermolekularen Polyolen und von Polyhydroxyverbindungen, die sterisch abgeschirmte Säuregruppen aufweisen, wie zum Beispiel Dimethylolpropionsäure, die nach mindestens teilweiser Neutralisation die erforderliche Hydrophilie des Harzes bewirken.

Derartige Mischbindemittel, die neben den wasserverdünnbaren Ölen noch mindestens ein weiteres wasserverdünnbares Bindemittel insbesondere ausgewählt aus Acrylatcopolymerisaten und Polyurethanen enthalten, sind insbesondere zur Herstellung von wasserverdünnbaren Lacken für die Lackierung von Holz, Papieren, Karton und Metallen geeignet, insbesondere werden sie bei der Lackierung von Holz eingesetzt.

Die nachfolgenden Beispiele erläutern die Erfindung. Dabei sind Konzentrationsangaben in "%" Massenanteile des gelösten Stoffes in der Lösung (Masse des gelösten Stoffes, dividiert durch die Masse der Lösung).

### Beispiele

### Beispiel 1: Synthese eines maleinierten säuremodifizierten Öls

880 g Leinöl (1 mol) wurden mit 220 g (2,25 mol) Maleinsäureanhydrid bei 210 °C bis zur vollendeten Adduktbildung umgesetzt. Nach Abkühlen der Reaktionsmasse auf 95 °C wurden 235 g Milchsäure (80 %ige Lösung in Wasser, 2,25 mol) zugegeben. Bei 100 °C wurden unter vermindertem Druck ca. 50 g Wasser abdestilliert.

### Beispiel 2: Synthese eines maleinierten Öls (Vergleich)

Beispiel 1 wurde wiederholt, jedoch wurde an Stelle der Milchsäure Wasser (10 % Überschuß über die stöchiometrische Menge) zur Ringöffnung der Maleinsäureanhydridgruppen verwendet.

### Beispiel 3: Synthese von maleinierten synthetischen Alkydölen

### Beispiel 3.1 Alkydöl 1

350 g Tallölfettsäure, 350 g Sojaölfettsäure, 92 g Glycerin und 0,8 g Triphenylphosphit wurden in einen Reaktor gefüllt und auf 230 °C geheizt. Durch Zugabe von 25 g Xylol wurde das Reaktionswasser azeotrop abdestilliert, das vom Wasser getrennte Xylol wurde im Kreis geführt. Es wurde solange bei dieser Temperatur unter Wasserabtrennung reagiert, bis nach ca. 5 Stunden die Säurezahl des Reaktionsgemisches auf weniger als 2 mg/g gefallen war. Nach Zugabe von 48 g Trimellithsäureanhydrid wurde weitere ca. 2 Stunden lang unter Abtrennung des Reaktionswassers bis zu einer Säurezahl von unter 15 mg/g verestert. Nach Zugabe von 78 g Polyglykol M 500 (Polyäthylenglykol, zahlenmittlere molare Masse 500 g/mol) wurde weitere ca. 4 Stunden unter Abtrennung des Reaktionswassers bis zu einer Säurezahl kleiner als 8 mg/g weiterverestert. Dann wurde das Xylol durch Destillation unter vermindertem Druck entfernt. Es ergab sich ein Öl mit einem Festkörpermassenanteil von mehr als 99 %, einer Säurezahl von 6,0 mg/g, und einer dynamischen Viskosität, gemessen bei 23 °C und einem Schergefälle von 100 s⁻¹, von 162 mPa ·s.

### Beispiel 3.2 Alkydöl 2

700 g Tallölfettsäure, 92 g Glycerin und 0,8 g Triphenylphosphit wurden in einen Reaktor gefüllt und auf 230 °C geheizt. Durch Zugabe von 25 g Xylol wurde das Reaktionswasser azeotrop abdestilliert, das vom Wasser getrennte Xylol wurde im Kreis geführt. Es wurde ca. fünf Stunden bei dieser Temperatur unter Wasserabtrennung reagiert, bis die Säurezahl des Reaktionsgemisches auf weniger als 2 mg/g gefallen war. Nach Zugabe von 48 g Trimellithsäureanhydrid wurde weitere ca. zwei Stunden unter Abtrennung des Reaktionswassers bis zu einer Säurezahl unter 10 mg/g verestert. Dann wurde das Xylol durch Destillation unter vermindertem Druck entfernt. Es ergab sich ein Öl mit einem Festkörpermassenanteil von mehr als 99 %, einer Säurezahl von 8,8 mg/g und einer dynamischen Viskosität, gemessen bei 23 °C und einem Schergefälle von 100 s⁻¹, von 160 mPa·s.

### Beispiel 3.3 Alkydöl 3

700 g Tallölfettsäure, 92 g Glycerin und 0,8 g Triphenylphosphit wurden in einen Reaktor gefüllt und auf 230 °C geheizt. Durch Zugabe von 25 g Xylol wurde das Reaktionswasser azeotrop abdestilliert, das vom Wasser getrennte Xylol wurde im Kreis geführt. Es wurde ca. fünf Stunden bei dieser Temperatur unter Wasserabtrennung reagiert, bis die Säurezahl des Reaktionsgemisches auf weniger als 2 mg/g gefallen war. Nach Zugabe von 30 g Phthalsäureanhydrid wurde weitere drei Stunden unter Abtrennung des Reaktionswassers bis zu einer Säurezahl unter 6 mg/g verestert. Dann wurde das Xylol durch Destillation unter vermindertem Druck entfernt. Es ergab sich ein Öl mit einem Festkörpermassenanteil von mehr als 99 %, einer Säurezahl von 4,7 mg/g und einer dynamischen Viskosität, gemessen bei 23 °C und einem Schergefälle von 100 s⁻¹, von 128 mPa·s.

### Beispiel 3.4 Umsetzen der Alkydöle 1, 2 und 3 mit Maleinsäure

Die Öle der Beispiele 3.1 bis 3.3 wurden jeweils mit 220 g (2,25 mol) Maleinsäureanhydrid bei 210 °C bis zur vollendeten Adduktbildung umgesetzt. Nach Abkühlen der Reaktionsmasse auf 95 °C wurden jeweils 235 g Milchsäure (80 %ige Lösung in Wasser, 2,25 mol) zugegeben. Bei 100 °C wurden jeweils unter vermindertem Druck ca. 50 g Wasser abdestilliert. Die erhaltenen maleinierten Alkydöle wurden als Öl 3.41, Öl 3.42 und Öl 3.43 bezeichnet.

### Beispiel 4 Verträglichkeitstest

Die Öle aus Beispiel 1, 2 und die Öle 3.41 bis 3.43 wurden jeweils mit einer handelsüblichen Acrylat-Dispersion (Basis Styrol und Acrylsäureester, Festkörper-Massenanteil ca. 50 %, Viskosität gemäß ISO 2555 bei 23 °C, Spindel 2: ca. 900 mPa·s, pH 8,5, ®Mowilith LDM 6621) im Massenverhältnis (jeweils bezogen auf Festkörper-Anteil) von 1:9 gemischt. Die Mischungen wurden bei 40 °C gelagert. Während die Mischung enthaltend das Öl aus Beispiel 2 bereits nach einer Stunde entmischt war, blieben die Mischungen mit dem Öl aus den Beispielen 1 und mit den Ölen 3.41 bis 3.43 über 8 Wochen (Abbruch der Beobachtungszeit) stabil.

### Beispiel 5: Herstellung von wasserverdünnbaren Lacken

Das modifizierte Öl aus Beispiel 1 wurde mit der im Beispiel 4 beschriebenen Dispersion zu einem Bindemittel abgemischt, mit den weiteren Zusätzen gemäß der Rezeptur wurde der Lack 2 formuliert. Dazu wurde die Bindemittelmischung vorgelegt, anschließend wurde die Pigmentpaste und die Additive langsam und portionsweise in der angegebenen Reihenfolge eingerührt. Dann wurde mit Wasser auf die gewünschte Viskosität von 200 mPa·s (gemessen nach ASTM-D 4287-88, der sog. "high shear" Methode, bei 23 °C und 10 000 s⁻¹) eingestellt. Als Vergleich (Lack 1) wurde die unmodifizierte Dispersion verwendet (dieselbe Rezeptur, jedoch ohne Ölzusatz). Durch Zusatz von 25 %iger wäßriger Ammoniaklösung wurde der pH-Wert auf 8,5 eingestellt.

### Rezeptur für 100 g des Lacks:

| | |
|---|---|
| 51,70 g ®Mowilith LDM 6621 | |
| 7,40 g modifiziertes Öl aus Beispiel 1 | |
| | |
| 27,30 g Pigmentpaste *) | |
| 0,20 g wäBrige Ammoniaklösung | (25 g NH₃ in 100 g Lösung) |
| 0,20 g ®Additol VXW 6386 | (Entschäumer, Surface Specialties Austria GmbH) |
| 1,50 g ®Mowilith VDM 7000 | (Rheologieadditiv, Acrylatverdicker, Clariant AG) |
| 0,20 g ®BYK 346 | (Untergrundbenetzungsmittel, Byk Chemie) |
| 2,50 g Propylenglykol | |
| 9,00 voll entsalztes Wasser | |

| | |
|---|---|
| * Zusammensetzung für 100 g der Pigmentpaste: | |

| | |
|---|---|
| 24,8 g voll entsalztes Wasser | |
| 2,9 g ®Additol VXW 6200 | (Dispergiermittel, Surface Specialties Austria GmbH) |
| 0,7 g ®AMP 90 | (2-Amino-2-methyl-1-propanol, Angus Chemie) |
| 0,7 g ®AMP 90 | (2-Amino-2-methyl-1-propanol, Angus Chemie) |
| 0,7 g®Agitan295 | (Entschäumer auf Mineralöl-Basis, Münzing Chemie GmbH) |
| 70,9 g Titandioxidpigment | (®Kronos 2310, Kronos Titan GmbH) |

Die Stoffe wurden in der angegebenen Reihenfolge vermischt und anschließend ca. 40 min. in einer Perlmühle dispergiert

Dabei ergaben sich die folgenden Meßwerte für die Lacke:

| | |
|---|---|
| Lackfestkörper (Festkörper-Massenanteil) : | ca. 47 % |
| Lackviskosität, ASTM D 4287-88, 10 000 s⁻¹ bei 23 °C: | ca. 200 mPa·s |
| Klebfreizeit, 152 µm Aufziehspalt: | ca. 30 min |
| Flammpunkt, DIN EN 22 719: | > 100 °C |

### Beispiel 6: Herstellen und Prüfen von Beschichtungen

Die Lacke 1 (Vergleich) und 2 wurden auf Glasplatten aufgetragen (Aufziehspalt 150 µm) und nach Lufttrocknung von ca. 24 Stunden bei Raumtemperatur (23 °C) unter anderem auf Glanz und Glanzschleier beurteilt. Die Ergebnisse sind in der nachfolgenden Tabelle 1 zusammengestellt:

| | Glanz (Meßwinkel 20° ) DIN 67530 | Glanzschleier (Wertebereich 10 bis 500) ASTM E 430 |
|---|---|---|
| Lack 1 (Vergleich) | 65 | 170 |
| Lack 2 | 80 | 150 |

Aus den Meßwerten ist deutlich die Verbesserung des Glanzes und die Verminderung des Schleiers zu erkennen, die durch den Zusatz des erfindungsgemäß modifizierten Öls erreicht wird. An weiteren Lacken, die mit den Ölen 3.41 bis 3.43 nach derselben Rezeptur formuliert waren, wurde ebenfalls eine Verbesserung des Glanzes und eine Verminderung des Glanzschleiers festgestellt.

## Patentansprüche

1. Wasserverdünnbare Öle **ABC**, enthaltend Bausteine abgeleitet von Ölen **A** mit im Mittel mindestens einer olefinischen Doppelbindung pro Molekül, cyclischen olefinisch ungesättigten Anhydriden **B** und organischen Säuren **C**, die mindestens eine Säuregruppe und mindestens eine weitere Gruppe aufweisen, die mit einem cyclischen Säureanhydrid unter Ringöffnung und Addition reagiert.

2. Wasserverdünnbare Öle **ABC** nach Anspruch 1, **dadurch gekennzeichnet, daß** die Öle **A** ausgewählt sind aus trocknenden und halbtrocknenden Ölen mit einer Jodzahl von mindestens 90 g/g.

3. Wasserverdünnbare Öle **ABC** nach Anspruch 1, **dadurch gekennzeichnet, daß** die Öle **A** ausgewählt sind aus natürlichen Ölen **A1**, synthetischen Ölen **A2**, die erhältlich sind durch Oligomerisation oder Polymerisation von mehrfach ungesättigten Olefinen und Ölen **A3**, die durch Kondensation von Fettsäuren **A31** und mehrwertigen Alkoholen **A32** erhältlich sind, wobei mindestens eine der Fettsäuren mindestens eine olefinische Doppelbindung aufweist.

4. Wasserverdünnbare Öle **ABC** nach Anspruch 3, **dadurch gekennzeichnet, daß** die Öle **A3** erhältlich sind durch Kondensation von Gemischen natürlicher Fettsäuren und mindestens dreiwertigen Alkoholen, wobei mindestens eine der Fettsäuren mindestens eine olefinische Doppelbindung aufweist.

5. Wasserverdünnbare Öle **ABC** nach Anspruch 1, **dadurch gekennzeichnet, daß** die cyclischen olefinisch ungesättigten Anhydride **B** ausgewählt sind aus Maleinsäureanydrid, Citraconsäureanhydrid und Itaconsäureanhydrid, Dodecenylbernsteinsäureanhydrid und Tetrahydrophthalsäureanhydrid.

6. Wasserverdünnbare Öle **ABC** nach Anspruch 1, **dadurch gekennzeichnet, daß** die organischen Säuren **C** ausgewählt aus organischen Carbon-, Sulfon- und Phosphonsäuren, die jeweils mindestens eine weitere reaktive Gruppe enthalten ausgewählt aus Hxydroxyl-, Amino- und Mercaptan-Gruppen.

7. Wasserverdünnbare Öle **ABC** nach Anspruch 1, **dadurch gekennzeichnet, daß** die organischen Säuren **C** ausgewählt sind aus aliphatischen Hydroxycarbonsäuren mit 2 bis 20 Kohlenstoffatomen.

8. Verfahren zur Herstellung von wasserverdünnbaren Öle **ABC** durch Umsetzung von trocknenden oder halbtrocknenden Ölen A mit im Mittel mindestens einer Doppelbindung pro Molekül mit cyclischen olefinisch ungesättigten Anhydriden **B** und organischen Säuren **C**, die mindestens eine Säuregruppe und eine weitere Gruppe aufweisen, die mit einem cyclischen Säureanhydrid unter Ringöffnung und Addition reagiert.

9. Verfahren nach Anspruch 8, **dadurch gekennzeichnet, daß** zuerst die Öle A mit den Säureanhydriden **B** umgesetzt werden, und dies Reaktionsprodukt mit der Säure **C** umgesetzt wird.

10. Verfahren nach Anspruch 8, **dadurch gekennzeichnet, daß** zunächst die Säuren C mit dem Anhydrid **B** zu einem Addukt **BC** umgesetzt werden, das im zweiten Schritt mit dem Öl **A** reagiert wird.

11. Wasserverdünnbare Bindemittel für Lacke, enthaltend die wasserverdünnbaren Öle **ABC** gemäß Anspruch 1.

12. Wasserverdünnbare Lacke, enthaltend die wasserverdünnbaren Öle **ABC** gemäß Anspruch 1 und mindestens ein weiteres Bindemittel ausgewählt aus wäßrigen Dispersionen von Acrylatcopolymerisaten und von Polyurethanen.
